# EUROPEAN PATENT SPECIFICATION

(11) **EP 3 670 929 B1**
(45) Date of publication and mention of the grant of the patent: **24.08.2022**
(21) Application number: 18214715.7
(22) Date of filing: 20.12.2018
(51) Int. Cl.: F15B 11/17, F03D 7/02, F15B 11/042

(54) **HYDRAULIC PUMP ARRANGEMENT**
HYDRAULIKPUMPENANORDNUNG
AGENCEMENT DE POMPE HYDRAULIQUE

(43) Date of publication of application: 24.06.2020
(73) Proprietor: Siemens Gamesa Renewable Energy A/S, 7330 Brande (DK)
(72) Inventor: Kristensen, Mikkel Aggersbjerg, 7400 Herning (DK)
(74) Representative: Aspacher, Karl-Georg

(56) References cited:
- WO-A2-2011/031851
- GB-A- 2 071 780
- JP-U- S5 932 190
- US-A1- 2014 096 581

## Description

The invention describes a hydraulic pump arrangement, a method of operating such a hydraulic pump arrangement, and a wind turbine comprising such a hydraulic pump arrangement.

With the increasing size of wind turbines, the hydraulic systems that are used to regulate various functions are also becoming larger. For example, with increasing rotor blade length and root diameter, it is necessary to provide a correspondingly more powerful hydraulic blade pitch system. Any such hydraulic system may comprise one or more motor-pump units. A motor-pump unit comprises a pump for adjusting the pressure of a fluid in a hydraulic piston chamber, and a motor to operate the pump. However, a larger motor-pump unit also draws higher electrical current, particularly when starting the motor. Instead of increasing the size of a motor-pump unit, a greater number of motor-pump units can be used instead, for example as disclosed in US2014096581A1 or in WO2011031851A2. When several motor-pump units are used collectively in a multiple motor-pump configuration, their outputs feed into a common node or "confluence" so that the pressurized working fluid can be delivered to the consumer. The hydraulic system can receive a pressure reference and/or a flow reference for the consumer. Such a pressure/flow reference will vary according to the requirements of the consumer. A suitable number of the units may be driven to obtain a desired pressure. However, whenever it is necessary to step up the pressure or flow by adding the contribution of another motor-pump unit, it is also necessary to relieve pressure at the confluence. This is because a pump should not be started up with a pressurized outlet.

There are essentially two reasons for not starting a pump whose outlet is under pressure. Firstly, the most common type of electric motor used in hydraulic motor-pump units is the squirrel-cage induction motor, which can only provide a fraction of its nominal-speed torque at low speeds, but since the torque required to drive a pump is proportional to the pressure, it follows that a low pressure at the pump outlet is required when the motor is started. Secondly, at very low speeds or after being inactive for a period of time, the lubrication in a hydraulic pump is generally poor, so that it is necessary to establish a sufficient oil film by running the pump at a low speed before gradually increasing the pressure.

One approach to addressing these issues is to discharge the outlet from each pump before and during startup to ensure that the pump outlet is not under pressure while the lubrication film is being established, and to ensure that the motor is not damaged. To this end, a single "dump valve" or "bypass valve" is provided at the confluence of the pump outlets. When this valve is opened, pressure is relieved at all pump outlets simultaneously. Whenever one or more of the motor-pump unit(s) are to be started, the dump valve is opened to relieve pressure. The dump valve is only closed again after a certain time has elapsed after starting the motor-pump unit(s), after which time it may be assumed that the motor-pump units have reached their nominal speed. However, this means that whenever an additional pump is to be added to increase the output of a multiple motor-pump configuration, the flow to the system is temporarily cut off. From the time at which the dump valve is opened until the time at which the pressure at the output has increased again, the system requirements for input flow may not be met. Such an interruption in the flow pressure to the consumer may result in undesirable dynamics. For example, the pitch system may not be able to follow the reference given, which may result in the wind turbine being subject to structural loads that exceed design limits. Such excessive loading can ultimately lead to damage and significant repair and maintenance costs.

It is therefore an object of the invention to provide an improved hydraulic pump arrangement that avoids the problems described above.

This object is achieved by the hydraulic pump arrangement of claim 1 and by the method of claim 8 of operating a hydraulic pump arrangement.

According to the invention, the hydraulic pump arrangement comprises a plurality of motor-pump units connected to a common confluence, wherein each motor-pump unit of the hydraulic pump arrangement comprises
- a pump realised to pass pressurized fluid at its outlet;
- a motor arranged to drive the pump;
- a bypass valve configured to relieve pressure at the pump outlet; and wherein
the hydraulic pump arrangement further comprises a controller configured to receive a feedback signal from each motor-pump unit, to determine the speed of the motor-pump units from the corresponding feedback signals, and to actuate the bypass valve of a motor-pump unit on the basis of the motor speed of that motor-pump unit.

An advantage of the hydraulic pump arrangement according to the invention is that a motor pump unit can be shut down while the other motor pump units remain running, so that pressure and flow at the common confluence - i.e. pressure and flow at the input to the consumer - is not interrupted. Equally, an additional motor pump unit can be started up while the other motor pump units remain running, again without interrupting the pressure at the common confluence. This has the advantage of not subjecting the consumer (e.g. a blade pitch system of a wind turbine) to a sudden loss of pressure while a motor pump unit is shut down or started. According to the invention, the method of operating a hydraulic pump arrangement comprises a step of obtaining a reference quantity for pressure and/or flow and determining the corresponding actual quantity at the confluence and,
- if the actual quantity is greater than the reference quantity, the method comprises the steps of: reducing the speed of a motor-pump unit to its minimum operating speed, opening the bypass valve of that motor-pump unit, and stopping that motor-pump unit;
- if the actual quantity is lower than the reference quantity, the method comprises the steps of: opening the bypass valve of an additional motor-pump unit, starting that motor-pump unit, increasing the speed of that motor-pump unit to reach its minimum operating speed, and subsequently closing the bypass valve of that motor-pump unit.

After stopping a motor-pump unit, its bypass valve can be closed, although this may not be a requirement. Therefore, it will only be necessary to open the bypass valve of an additional motor-pump unit before starting, if that bypass valve was actually closed.

The wind turbine according to the invention comprises a number of such hydraulic pump arrangements configured to provide pressurized fluid to a consumer such as a hydraulic rotor blade pitching system and/or a hydraulic rotor brake system and/or a service crane system. For each of these consumers, the wind turbine may comprise a dedicated hydraulic pump arrangement.

Particularly advantageous embodiments and features of the invention are given by the dependent claims, as revealed in the following description.

The pump of a motor-pump unit can be any of: an internal gear pump, an external gear pump, an axial piston pump. In a particularly preferred embodiment of the invention, the motor of a motor pump unit comprises a variable-frequency drive, since this type of motor requires a relatively low starting current and can mitigate, to some extent, the problem of a low starting torque. A variable-frequency drive may also be referred to as a "soft starter" for this reason. In the following, it may be assumed that each motor pump unit comprises a variable-frequency drive. A motor pump unit is realised to provide some suitable feedback to the controller regarding motor speed and/or motor torque. The bypass valve can also be realised in any suitable manner, and is preferably realised to respond - i.e. change its state between opened or closed - in response to an electrical signal received from the controller. The bypass valve of a motor pump unit can be a seat valve, a spool valve, a controllable relief valve, or any other suitable type of valve. The inventive method comprises a step of controlling a bypass valve of a motor-pump unit on the basis of the speed of the corresponding motor pump unit.

In the following, without restricting the invention in any way, it may be assumed that the motor pump units of the hydraulic pump arrangement are essentially identical. The pump outlets of all motor pump units feed into a common confluence, which in turn is the input to the consumer. In the same manner, the bypass valves of all motor pump units can feed into a common sink, for example into the return line from the consumer. The return line from the consumer can be filtered before draining into a common reservoir from which the pumps feed.

A quantity of interest at the confluence can be pressure and/or flow. The hydraulic pump arrangement can be configured to deliver a target pressure and/or a target flow at the confluence, and to determine the actual pressure and/or flow at the confluence. In the following, therefore, the word "quantity" as used in the expressions "reference quantity", "target quantity", "actual quantity" etc. may be understood to mean pressure and/or flow.

In a particularly preferred embodiment of the invention, the motor-pump units are arranged in a parallel configuration, i.e. all pumps fed from a common reservoir and feed into the common confluence.

As indicated above, a motor pump unit is preferably realised to provide some suitable feedback to the controller so that the controller can determine the motor speed, from which it may deduce the pressure at the outlet of that motor-pump unit. For example, a motor-pump unit may comprise a speed sensor to determine the motor speed and to provide a motor speed feedback signal to the controller.

Alternatively, in a further preferred embodiment of the invention, a motor pump unit may be calibrated to establish a relationship between motor speed and motor torque, i.e. a relationship between motor speed and outlet pressure. In such an embodiment, the feedback signal may be provided by a pressure sensor at the pump outlet, and the controller may deduce the motor speed from the measured pressure. An initial step of the inventive method may comprise a step of modelling a motor-pump unit to establish a relationship between motor speed and outlet pressure in order to identify a minimum operating speed and a maximum operating speed. Of course, such information may be provided by the manufacturer of the motor pump unit, so that the initial step of the inventive method may simply involve obtaining this data and realising the controller to apply the data accordingly.

During operation of the consumer, the required hydraulic quantity may change, i.e. the consumer may require a higher or lower pressure and/or a different flow rate, depending on what is happening at the consumer. In a wind turbine, it is generally the wind turbine controller that determines the reference quantities required at any one time for each consumer, since the wind turbine controller synchronises the operation of systems such as blade pitch systems, lubrication systems, etc. In a preferred embodiment of the invention, the wind turbine controller preferably forwards each reference quantity to the controller of the corresponding hydraulic pump arrangement.

The controller can respond to a changed reference quantity by continually monitoring or estimating the actual quantity at the confluence, and responding to a discrepancy by managing the motor pump units. For example, the controller may decrease the speed of one or more motor-pump units towards their minimum operating speeds as long as the actual quantity is greater than a target quantity. If this is not enough to lower the actual quantity, the controller can then shut down a motor pump unit to achieve the desired quantity decrease as explained above. Equally, the controller may increase the speed of one or more motor-pump units as long as the actual quantity is lower than the target or reference quantity. If this is not enough to obtain the desired pressure increase, the controller can then start up an additional motor pump unit as explained above.

Other objects and features of the present invention will become apparent from the following detailed descriptions considered in conjunction with the accompanying drawings. It is to be understood, however, that the drawings are designed solely for the purposes of illustration and not as a definition of the limits of the invention.
- Fig 1: shows a schematic diagram of an embodiment of the hydraulic pump arrangement;
- Figs 2 and 3: show a flowchart to illustrate steps of the inventive method;
- Fig 4: is a schematic representation of a wind turbine with several embodiments of the inventive hydraulic pump arrangements;
- Fig 5: shows a conventional hydraulic pump arrangement.

In the diagrams, like numbers refer to like objects throughout. Objects in the diagrams are not necessarily drawn to scale.

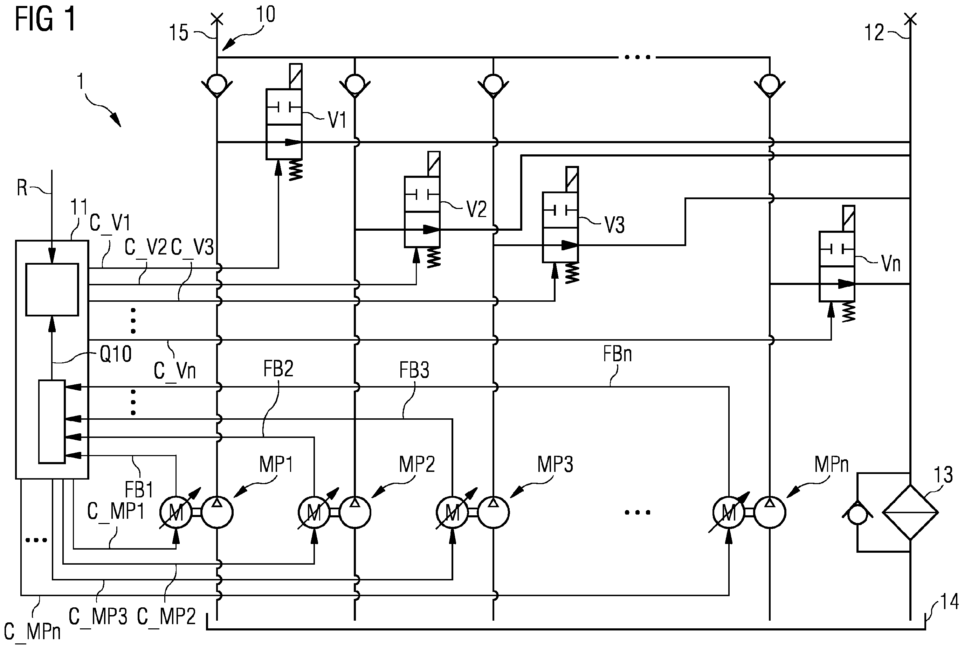

Fig 1 shows a schematic diagram of an embodiment of the hydraulic pump arrangement 1. In this exemplary embodiment, the hydraulic pump arrangement 1 comprises n motor pump units MP1, ..., MPn. Each motor pump unit MP1, ..., MPn comprises a pump such as an internal gear pump or similar, and a motor such as a variable speed motor. The outlets of the motor pump units MP1, ..., MPn converge at a common confluence 10. The outlet of each motor pump unit MP1, ..., MPn is also connected to a return line 12 via a bypass valve V1, ..., Vn. A consumer may be assumed to be connected between the confluence 10 and the return line 12, and these points of connection are indicated by the "x" symbols. The diagram also shows various other elements with which the skilled person will be familiar, such as a filter 13 in a return line 12, a supply line 15 to deliver the pressurized working fluid to the consumer, and a fluid reservoir or tank 14.

In this exemplary embodiment, a bypass valve V1, ..., Vn is realised as a spool valve, but can equally be realised as a seat valve or a controlled pressure relief valve, as will be known to the skilled person. Each valve V1, ..., Vn can be actuated - i.e. opened or closed - in response to a signal C_V1, ..., C_Vn from a controller 11.

The inventive hydraulic pump arrangement 1 measures or estimates the pressure and/or flow at the confluence 10, and compares the actual quantity Q₁₀ with a reference quantity R.

The reference quantity R can comprise a reference pressure and/or a reference flow, so that the actual quantity Q₁₀ may be understood to comprise a value of pressure and/or a value of flow. The actual quantity Q₁₀ at the confluence 10 can be measured directly using an appropriate sensor, for example. Alternatively, a known relationship may be used to estimate the momentary pressure and/or flow Q₁₀ at the confluence 10. For example, the actual flow at the confluence 10 can be determined from a known relationship between pump flow and motor speed. Knowing the motor speed of each motor pump unit MP1, ..., MPn as reported by feedback signals FB1, ..., FBn, the combined flow at the confluence 10 can be determined to a relatively high degree of accuracy. The motor speed of a motor pump unit MP1, ..., MPn can easily be obtained, for example as an rpm feedback signal FB1, ..., FBn from a variable speed drive. Alternatively, the motor speed may be deduced from a pressure measured at each pump outlet and reported as a feedback signals FB1, ..., FBn.

The controller 11 can compare the measured or estimated quantity Q₁₀ with the reference quantity R for the consumer of that hydraulic pump arrangement 1. If the pressure/flow Q₁₀ at the confluence 10 needs to be adjusted, the controller 11 can initially issue control signals C_MP1, ..., C_MPn to one or more motors of the hydraulic pump arrangement 1 to increase or decrease motor speed as appropriate. In this drawing, it is assumed that motor pump units MP1, MP2 are running, and the measured or estimated pressure/flow Q₁₀ at the confluence 10 is lower than the reference pressure/flow R. If the controller 11 establishes that the motors of those motor pump units MP1, MP2 are already running at maximum speed (using feedback signals FB1, FB2), the controller 11 opens the bypass valve V3 of an additional motor pump unit MP3, starts its motor and monitors its speed by means of its feedback signal FB3 until the speed of that additional motor pump unit MP3 has reached the minimum operating speed (at which the pump lubrication level is deemed to be satisfactory). At this point, the controller 11 issues a signal C_V3 to close the bypass valve V3 of the additional motor pump unit MP3. The speed of this motor pump unit MP3 can then be gradually increased (with an appropriate control signal C_MP3) while monitoring the pressure/flow Q₁₀ at the confluence 10. If the actual quantity Q₁₀ meets the target requirement R, the controller 11 will maintain this configuration of the hydraulic pump arrangement 1. Otherwise, the steps can be repeated to start a further motor pump unit.

In an alternative scenario, again using Fig 1, it is assumed that motor pump units MP1, MP2, MP3 are running, and that at some point, the pressure/flow Q₁₀ at the confluence 10 is higher than the reference pressure/flow R. To respond to the lower requirement R, the controller 11 lowers the speed of one or more motor pump units while monitoring the actual pressure/flow Q₁₀. If the pressure/flow Q₁₀ at the confluence 10 cannot be lowered sufficiently in this way, even if all active motor pump units MP1, MP2, MP3 are running at their lowest speeds (monitored by the feedback signals FB1, FB2, FB3), the controller 11 selects a motor pump unit to shut down, for example the second motor pump unit MP2. It issues a signal C_V2 to open the bypass valve V2 of that motor pump unit MP2, turns off the motor, and issues a signal C_V2 to close the bypass valve V2. If the actual pressure/flow Q₁₀ at the confluence 10 can be reduced to meet the lowered reference R by these steps, the controller 11 will maintain this configuration. Otherwise, the steps can be repeated to shut down a further motor pump unit.

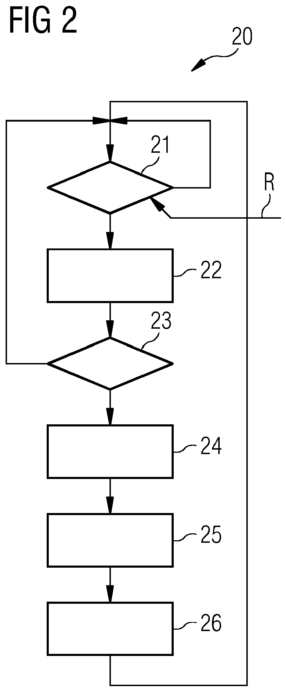

As explained with Fig 1 above, a reference pressure/flow R can be provided for a consumer, and the hydraulic pump arrangement 1 that serves that consumer will regulate its motor-pump units MP1, ..., MPn to the reference quantity R whenever this is changed. Fig 2 shows a flowchart 20 to illustrate the steps of the inventive method when a reduced pressure is required at the confluence 10 of Fig 1. In a first step 21, the actual quantity Q₁₀ at the confluence 10 is compared to the reference quantity R. If the actual quantity Q₁₀ is too high, the speed of one or more of the motor pump units MP1, ..., MPn is reduced in step 21. In step 22, the speed of the slowest motor is compared to its minimum speed threshold. As long as there are one or more motor-pump units running above this minimum speed threshold, the speed of one or more of them can be reduced by repeating steps 21 - 23. If in step 23 it is seen that each motor-pump unit is running at its lowest possible speed, one of the motor pump units is selected to be switched off. In step 24, the bypass valve of that motor pump unit is opened, the motor is stopped in step 25, and its bypass valve is closed again in step 26. The control flow returns to step 21, where the actual pressure/flow Q₁₀ is again compared to the reference pressure/flow R. If necessary, the control loop 20 repeats until the target pressure/flow R is reached.

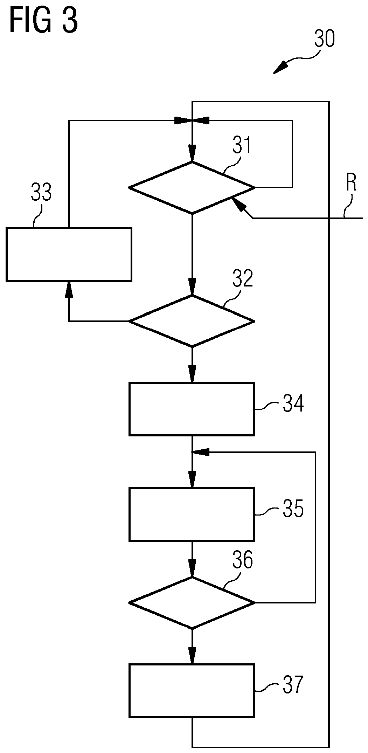

Fig 3 shows a flowchart 30 to illustrate the steps of the inventive method when a higher reference pressure/flow R is required at the confluence 10. In a first step 31, the actual pressure/flow Q₁₀ at the confluence is compared to the reference pressure/flow R. If the actual pressure/flow Q₁₀ is too low, the motor speeds are checked in step 32 to see whether all are running at maximum speed. If not, the speed of one or more of the motor pump units is increased in step 33. If yes, the bypass valve of an additional motor pump unit is opened, and the additional motor pump unit is started in step 34. The speed of this pump is increased in step 35. In step 36, it is checked to see whether the additional motor pump unit has reached its minimum speed. If not, the control returns to step 35. If yes, the bypass valve of that motor pump unit is closed in step 37, and control returns to step 31. If necessary, the control loop 30 repeats until the target pressure/flow R is reached.

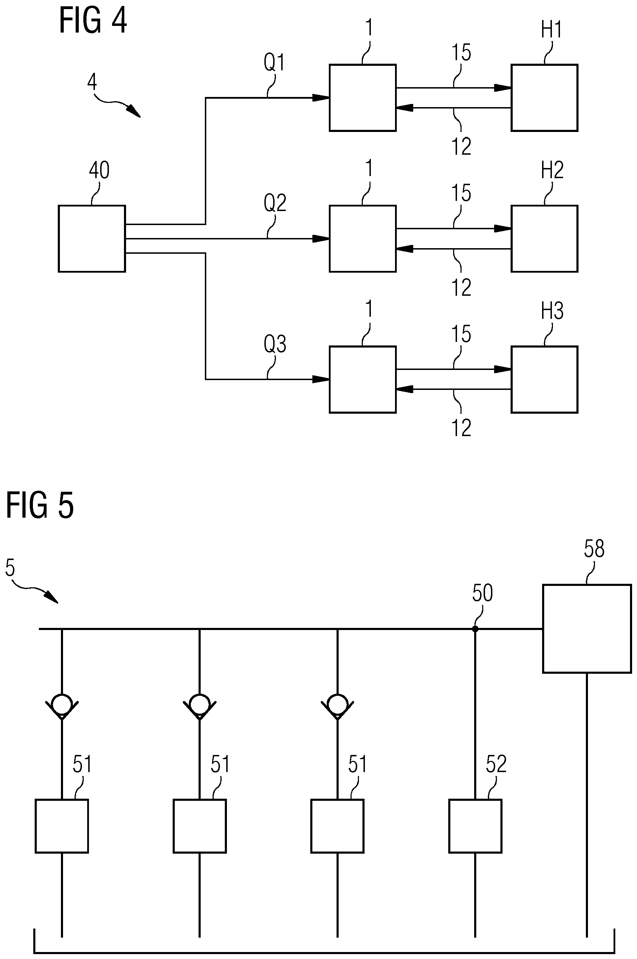

Fig 4 is a schematic representation of a wind turbine 4 with a number of hydraulic systems H1, H2, H3 - in this case a hydraulic rotor blade pitching system H1, a hydraulic rotor brake system H2 and a hydraulic service crane system H3. Each hydraulic system H1, H2, H3 is the consumer of an embodiment of the inventive hydraulic pump arrangement 1, receiving pressurized fluid over a supply line 15 and returning fluid via a return line 12. Each hydraulic pump arrangement 1 comprises a suitable number of motor-pump units, depending on the requirements of its consumer. During operation of the wind turbine, the required hydraulic pressure of each consumer H1, H2, H3 will be subject to fluctuation, depending on what is happening at the consumer H1, H2, H3. To respond to these changing requirements, a control unit - the wind turbine controller 40 in this exemplary embodiment - updates the target or reference pressure/flow values of each consumer H1, H2, H3 and forwards the references Q1, Q2, Q3 to the controllers of the hydraulic pump arrangements 1.

Fig 5 shows a conventional hydraulic pump arrangement 5. Here also, multiple motor-pump units 51 serve a consumer 58, and their outlets meet at a common confluence 50. A single bypass valve 52 or dump valve 52 is arranged on the far side of the confluence 50. As a result, whenever a motor-pump unit 51 must be shut down (to achieve a lower target pressure at the confluence 50) or switched on (to meet an increased target pressure at the confluence 50), a drop in pressure is seen by the consumer 58. This can lead to undesirable dynamics as explained above, for at least the duration needed to shut down or start up the motor-pump unit 51 and to restore pressure at the confluence 50.

Although the present invention has been disclosed in the form of preferred embodiments and variations thereon, it will be understood that numerous additional modifications and variations could be made thereto without departing from the scope of the invention as defined by the claims.

For the sake of clarity, it is to be understood that the use of "a" or "an" throughout this application does not exclude a plurality, and "comprising" does not exclude other steps or elements.

## Claims

1. A hydraulic pump arrangement (1) comprising a plurality of motor-pump units (MP1, ..., MPn) connected to a common confluence (10), wherein each motor-pump unit (MP1, ..., MPn) of the hydraulic pump arrangement (1) comprises
- a pump realised provide pressurized fluid at its outlet;
- a motor arranged to drive the pump;
- a bypass valve (V1, ..., Vn) configured to relieve pressure at the pump outlet; wherein the hydraulic pump arrangement (1) further comprises a controller (11) configured to receive a feedback signal (FB1, ..., FBn) from each motor-pump unit (MP1, ..., MPn), to determine the speed of the motor-pump units from the corresponding feedback signals, and to actuate the bypass valve (V1, ..., Vn) of a motor-pump unit (MP1, ..., MPn) on the basis of the motor speed of that motor-pump unit (MP1, ..., MPn).

2. A hydraulic pump arrangement according to claim 1, wherein the motor of a motor-pump unit (MP1, ..., MPn) comprises a variable-frequency drive.

3. A hydraulic pump arrangement according to claim 1 or claim 2, wherein a bypass valve (V1, ..., Vn) is any of a seat valve, a spool valve or a controllable relief valve.

4. A hydraulic pump arrangement according to any of the preceding claims, wherein the pump of a motor-pump unit (MP1, ..., MPn) is realised as any of: an internal gear pump, an external gear pump, an axial piston pump.

5. A hydraulic pump arrangement according to any of the preceding claims, wherein a motor-pump unit (MP1, ..., MPn) comprises a speed sensor arranged to determine its motor speed and to provide a feedback signal (FB1, ..., FBn) to the controller (11).

6. A hydraulic pump arrangement according to any of the preceding claims, wherein a motor-pump unit (MP1, ..., MPn) comprises a pressure transducer arranged at the pump outlet and configured to provide a feedback signal (FB1, ..., FBn) to the controller (11).

7. A hydraulic pump arrangement according to any of the preceding claims, wherein the controller (11) is realised to estimate a value (Q₁₀) of pressure and/or flow at the confluence (10) from the feedback signals (FB1, ..., FBn) and to compare the estimated quantity (Q₁₀) with a reference quantity (R).

8. A method of operating a hydraulic pump arrangement (1) according to any of claims 1 to 7, which method comprises a step of obtaining a reference quantity (R) and determining the corresponding actual quantity (Q₁₀) at the confluence (10) and,
- if the actual quantity (Q₁₀) is greater than the reference quantity (R), the method comprises the steps of: reducing the speed of a motor-pump unit (MP1, ..., MPn) to its minimum operating speed, opening the bypass valve (V1, ..., Vn) of that motor-pump unit (MP1, ..., MPn), stopping that motor-pump unit (MP1, ..., MPn), and closing the bypass valve (V1, ..., Vn) of that motor-pump unit (MP1, ..., MPn);
- if the actual quantity (Q₁₀) is lower than the reference quantity (R), the method comprises the steps of: opening the bypass valve (V1, ..., Vn) of an additional motor-pump unit (MP1, ..., MPn), starting that motor-pump unit (MP1, ..., MPn), increasing the speed of that motor-pump unit (MP1, ..., MPn) to reach its minimum operating speed, and subsequently closing the bypass valve (V1, ..., Vn) of that motor-pump unit (MP1, ..., MPn).

9. The method according to claim 8, comprising a step of decreasing the speed of a number of operational motor-pump units (MP1, ..., MPn) towards their minimum operating speed while the actual quantity (Q₁₀) is greater than the reference quantity (R).

10. The method according to claim 8 or claim 9, comprising a step of increasing the speed of a number of operational motor-pump units (MP1, ..., MPn) towards their maximum operating speed while the actual quantity (Q₁₀) is lower than the reference quantity (R).

11. The method according to any of claims 8 to 10, wherein the motor of a motor-pump unit (MP1, ..., MPn) comprises a variable-frequency drive configured to provide a speed feedback signal (FB1, ..., FBn), and the method comprises a step of regulating the bypass valve (V1, ..., Vn) of that motor-pump unit (MP1, ..., MPn) on the basis of the speed feedback signal (FB1, ..., FBn).

12. The method according to any of claims 8 to 11, comprising a step of modelling a motor-pump unit (MP1, ..., MPn) to determine a relationship between motor speed and pump flow and/or to determine a relationship between motor torque and pump pressure and/or to determine a relationship between motor torque and pressure at the confluence (10).

13. A wind turbine (4) comprising a number of hydraulic pump arrangements (1) according to any of claims 1 to 7, configured to provide pressurized fluid to a hydraulic rotor blade pitching system (H1) and/or a hydraulic rotor brake system (H2) and/or a service crane system (H3).

14. A wind turbine according to claim 13, wherein a wind turbine controller (40) is realised to generate a reference quantity (Q1, Q2, Q3) for each consumer (H1, H2, H3) and to forward the reference quantities (Q1, Q2, Q3) to the corresponding hydraulic pump arrangements (1).

## Patentansprüche

1. Hydraulikpumpenanordnung (1), die eine Mehrzahl von Motor-Pumpen-Einheiten (MP1, ..., MPn) umfasst, die mit einem gemeinsamen Zusammenfluss (10) verbunden sind, wobei jede Motor-Pumpen-Einheit (MP1, ..., MPn) der Hydraulikpumpenanordnung (1) Folgendes umfasst
- eine Pumpe, die dazu ausgeführt ist, Druck beaufschlagtes Fluid an ihrem Auslass bereitzustellen;
- einen Motor, der dazu angeordnet ist, die Pumpe anzutreiben;
- ein Umgehungsventil (V1, ..., Vn), das dazu ausgelegt ist, Druck an dem Pumpenauslass abzulassen;
wobei
die Hydraulikpumpenanordnung (1) ferner eine Steuerung (11) umfasst, die dazu ausgelegt ist, ein Rückkopplungssignal (FB1, ..., FBn) von jeder Motor-Pumpen-Einheit (MP1, ..., MPn) zu empfangen, um die Drehzahl der Motor-Pumpen-Einheiten aus den entsprechenden Rückkopplungssignalen zu bestimmen, und das Umgehungsventil (V1, ..., Vn) einer Motor-Pumpen-Einheit (MP1, ..., MPn) auf der Basis der Motordrehzahl dieser Motor-Pumpen-Einheit (MP1, ..., MPn) zu betätigen.

2. Hydraulikpumpenanordnung nach Anspruch 1, wobei der Motor einer Motor-Pumpen-Einheit (MP1, ..., MPn) einen Antrieb mit variabler Frequenz umfasst.

3. Hydraulikpumpenanordnung nach Anspruch 1 oder Anspruch 2, wobei ein Umgehungsventil (V1, ..., Vn) ein beliebiges eines Sitzventils, eines Schieberventils oder eines steuerbaren Ablassventils ist.

4. Hydraulikpumpenanordnung nach einem der vorhergehenden Ansprüche, wobei die Pumpe einer Motor-Pumpen-Einheit (MP1, ..., MPn) als eine beliebige von Folgenden ausgeführt ist: eine Innenzahnradpumpe, eine Außenzahnradpumpe, eine Axialkolbenpumpe.

5. Hydraulikpumpenanordnung nach einem der vorhergehenden Ansprüche, wobei eine Motor-Pumpen-Einheit (MP1, ..., MPn) einen Drehzahlsensor umfasst, der dazu angeordnet ist, ihre Motordrehzahl zu bestimmen und ein Rückkopplungssignal (FB1, ..., FBn) zu der Steuerung (11) bereitzustellen.

6. Hydraulikpumpenanordnung nach einem der vorhergehenden Ansprüche, wobei eine Motor-Pumpen-Einheit (MP1, ..., MPn) einen Druckaufnehmer umfasst, der an dem Pumpenauslass angeordnet und dazu ausgelegt ist, ein Rückkopplungssignal (FB1, ..., FBn) zu der Steuerung (11) bereitzustellen.

7. Hydraulikpumpenanordnung nach einem der vorhergehenden Ansprüche, wobei die Steuerung (11) dazu ausgeführt ist, einen Wert (Q₁₀) eines Drucks und/oder eines Durchflusses an dem Zusammenfluss (10) aus den Rückkopplungssignalen (FB1, ..., FBn) zu schätzen und die geschätzte Größe (Q₁₀) mit einer Referenzgröße (R) zu vergleichen.

8. Verfahren zum Betreiben einer Hydraulikpumpenanordnung (1) nach einem der Ansprüche 1 bis 7, wobei das Verfahren einen Schritt zum Erhalten einer Referenzgröße (R) und Bestimmen der entsprechenden tatsächlichen Größe (Q₁₀) an dem Zusammenfluss (10) umfasst und wobei,
- wenn die tatsächliche Größe (Q₁₀) größer als die Referenzgröße (R) ist, das Verfahren die folgenden Schritte umfasst: Reduzieren der Drehzahl einer Motor-Pumpen-Einheit (MP1, ..., MPn) auf ihre minimale Betriebsdrehzahl, Öffnen des Umgehungsventils (V1, ..., Vn) dieser Motor-Pumpen-Einheit (MP1, ..., MPn), Stoppen dieser Motor-Pumpen-Einheit (MP1, ..., MPn), und Schließen des Umgehungsventils (V1, ..., Vn) dieser Motor-Pumpen-Einheit (MP1, ..., MPn);
- wenn die tatsächliche Größe (Q₁₀) kleiner als die Referenzgröße (R) ist, das Verfahren die folgenden Schritte umfasst: Öffnen des Umgehungsventils (V1, ..., Vn) einer zusätzlichen Motor-Pumpen-Einheit (MP1, ..., MPn), Starten dieser Motor-Pumpen-Einheit (MP1, ..., MPn), Erhöhen der Drehzahl dieser Motor-Pumpen-Einheit (MP1, ..., MPn), um ihre minimale Betriebsdrehzahl zu erreichen, und anschließendes Schließen des Umgehungsventils (V1, ..., Vn) dieser Motor-Pumpen-Einheit (MP1, ..., MPn).

9. Verfahren nach Anspruch 8, umfassend einen Schritt zum Verringern der Drehzahl einer Anzahl von betriebsbereiten Motor-Pumpen-Einheiten (MP1, ..., MPn) hin zu ihrer minimalen Betriebsdrehzahl, während die tatsächliche Größe (Q₁₀) größer als die Referenzgröße (R) ist.

10. Verfahren nach Anspruch 8 oder Anspruch 9, umfassend einen Schritt zum Erhöhen der Drehzahl einer Anzahl von betriebsbereiten Motor-Pumpen-Einheiten (MP1, ..., MPn) hin zu ihrer maximalen Betriebsdrehzahl, während die tatsächliche Größe (Q₁₀) kleiner als die Referenzgröße (R) ist.

11. Verfahren nach einem der Ansprüche 8 bis 10, wobei der Motor einer Motor-Pumpen-Einheit (MP1, ..., MPn) einen Antrieb mit variabler Frequenz umfasst, der dazu ausgelegt ist, ein Drehzahlrückkopplungssignal (FB1, ..., FBn) bereitzustellen, und wobei das Verfahren einen Schritt zum Regulieren des Umgehungsventils (V1, ..., Vn) dieser Motor-Pumpen-Einheit (MP1, ..., MPn) auf der Basis des Drehzahlrückkopplungssignals (FB1, ..., FBn) umfasst.

12. Verfahren nach einem der Ansprüche 8 bis 11, umfassend einen Schritt zum Modellieren einer Motor-Pumpen-Einheit (MP1, ..., MPn), um ein Verhältnis zwischen Motordrehzahl und Pumpendurchfluss zu bestimmen und/oder ein Verhältnis zwischen Motordrehmoment und Pumpendruck zu bestimmen und/oder ein Verhältnis zwischen Motordrehmoment und Druck an dem Zusammenfluss (10) zu bestimmen.

13. Windenergieanlage (4), die eine Anzahl von Hydraulikpumpenanordnungen (1) nach einem der Ansprüche 1 bis 7 umfasst, die dazu ausgelegt sind, Druck beaufschlagtes Fluid zu einem hydraulischen Rotorblattverstellsystem (H1) und/oder einem hydraulischen Rotorbremssystem (H2) und/oder einem Servicekransystem (H3) bereitzustellen.

14. Windenergieanlage nach Anspruch 13, wobei eine Windenergieanlagensteuerung (40) dazu ausgeführt ist, eine Referenzgröße (Q1, Q2, Q3) für jeden Verbraucher (H1, H2, H3) zu generieren und die Referenzgrößen (Q1, Q2, Q3) zu den entsprechenden Hydraulikpumpenanordnungen (1) weiterzuleiten.

## Revendications

1. Agencement de pompe hydraulique (1) comprenant une pluralité d'unités moteur-pompe (MP1, ..., MPn) raccordées à une convergence (10) commune, dans lequel chaque unité moteur-pompe (MP1, ..., MPn) de l'agencement de pompe hydraulique (1) comprend
- une pompe réalisée pour fournir un liquide sous pression à sa sortie ;
- un moteur agencé pour entraîner la pompe ;
- une vanne de dérivation (V1, ..., Vn) configurée pour réduire la pression à la sortie de pompe ;
dans lequel l'agencement de pompe hydraulique (1) comprend en outre un contrôleur (11) configuré pour recevoir un signal de rétroaction (FB1, ..., FBn) à partir de chaque unité moteur-pompe (MP1, ..., MPn), pour déterminer la vitesse des unités moteur-pompe à partir des signaux de rétroaction correspondants, et pour activer la vanne de dérivation (V1, ..., Vn) d'une unité moteur-pompe (MP1, ..., MPn) sur la base de la vitesse du moteur de cette unité moteur-pompe (MP1, ..., MPn).

2. Agencement de pompe hydraulique selon la revendication 1, dans lequel le moteur d'une unité moteur-pompe (MP1, ..., MPn) comprend un entraînement à fréquence variable.

3. Agencement de pompe hydraulique selon la revendication 1 ou la revendication 2, dans lequel une vanne de dérivation (V1, ..., Vn) est l'une parmi une vanne à siège, une vanne à tiroir cylindrique ou une vanne de décharge pouvant être commandée.

4. Agencement de pompe hydraulique selon l'une quelconque des revendications précédentes, dans lequel la pompe d'une unité moteur-pompe (MP1, ..., MPn) est réalisée selon l'une quelconque parmi : une pompe à engrenage interne, une pompe à engrenage externe, une pompe à piston axial.

5. Agencement de pompe hydraulique selon l'une quelconque des revendications précédentes, dans lequel une unité moteur-pompe (MP1, ..., MPn) comprend un capteur de vitesse agencé pour déterminer sa vitesse de moteur et pour fournir un signal de rétroaction (FB1, ..., FBn) au contrôleur (11).

6. Agencement de pompe hydraulique selon l'une quelconque des revendications précédentes, dans lequel une unité moteur-pompe (MP1, ..., MPn) comprend un transducteur de pression agencé à la sortie de la pompe et configuré pour fournir un signal de rétroaction (FB1, ..., FBn) au contrôleur (11).

7. Agencement de pompe hydraulique selon l'une quelconque des revendications précédentes, dans lequel le contrôleur (11) est réalisé pour estimer une valeur (Q₁₀) de pression et/ou un flux au niveau de la convergence (10) à partir des signaux de rétroaction (FB1, ..., FBn) et pour comparer la quantité (Q₁₀) estimée à une quantité de référence (R).

8. Procédé de fonctionnement d'un agencement de pompe hydraulique (1) selon l'une quelconque des revendications 1 à 7, le procédé comprend une étape d'obtention d'une quantité de référence (R) et la détermination de la quantité (Q₁₀) actuelle correspondante au niveau de la convergence (10) et,
- si la quantité (Q₁₀) actuelle est supérieure à la quantité de référence (R), le procédé comprend les étapes de : réduction de la vitesse d'une unité moteur-pompe (MP1, ..., MPn) à sa vitesse de fonctionnement minimale, l'ouverture de la vanne de dérivation (V1, ..., Vn) de cette unité moteur-pompe (MP1, ..., MPn), arrêt de cette unité moteur-pompe (MP1, ..., MPn), et fermeture de la vanne de dérivation (V1, ..., Vn) de cette unité moteur-pompe (MP1, ..., MPn) ;
- si la quantité (Q₁₀) actuelle est inférieure à la quantité de référence (R), le procédé comprend les étapes de : ouverture de la vanne de dérivation (V1, ..., Vn) d'une unité moteur-pompe (MP1, ..., MPn) additionnelle, démarrage de cette unité moteur-pompe (MP1, ..., MPn), augmentation de la vitesse de cette unité moteur-pompe (MP1, ..., MPn) pour atteindre sa vitesse de fonctionnement minimale, et par la suite fermeture de la vanne de dérivation (V1, ..., Vn) de cette unité moteur-pompe (MP1, ..., MPn) .

9. Procédé selon la revendication 8, comprenant une étape de réduction de la vitesse d'un nombre d'unités moteur-pompe (MP1, ..., MPn) opérationnelles vers leur vitesse de fonctionnement minimale pendant que la quantité (Q₁₀) actuelle est supérieure à la quantité de référence (R).

10. Procédé selon la revendication 8 ou la revendication 9, comprenant une étape d'augmentation de la vitesse d'un nombre d'unités moteur-pompe (MP1, ..., MPn) opérationnelles vers leur vitesse de fonctionnement maximale pendant que la quantité (Q₁₀) actuelle est inférieure à la quantité de référence (R).

11. Procédé selon l'une quelconque des revendications 8 à 10, dans lequel le moteur d'une unité moteur-pompe (MP1, ..., MPn) comprend un entraînement à fréquence variable configuré pour fournir un signal de rétroaction (FB1, ..., FBn) de vitesse, et le procédé comprend une étape de régulation de la vanne de dérivation (V1, ..., Vn) de cette unité moteur-pompe (MP1, ..., MPn) sur la base du signal de rétroaction (FB1, ..., FBn) de vitesse.

12. Procédé selon l'une quelconque des revendications 8 à 11, comprenant une étape de modélisation d'une unité moteur-pompe (MP1, ..., MPn) pour déterminer une relation entre des vitesses de moteur et des flux de pompe et/ou pour déterminer une relation entre des couples de moteur et des pressions de pompe et/ou pour déterminer une relation entre un couple de moteur et une pression au niveau de la convergence (10).

13. Éolienne (4) comprenant un nombre d'agencements de pompe hydraulique (1) selon l'une quelconque des revendications 1 à 7, configurée pour fournir un liquide sous pression à un système de tangage de pale de rotor hydraulique (H1) et/ou à un système de frein de rotor hydraulique (H2) et/ou à un système de grue de service (H3).

14. Éolienne selon la revendication 13, dans laquelle un contrôleur d'éolienne (40) est réalisé pour générer une quantité de référence (Q1, Q2, Q3) pour chaque consommateur (H1, H2, H3) et pour faire suivre les quantités de référence (Q1, Q2, Q3) aux agencements de pompe hydraulique (1) correspondants.
